# EUROPÄISCHE PATENTSCHRIFT

(11) **EP 4 164 824 B1**
(45) Veröffentlichungstag und Bekanntmachung des Hinweises auf die Patenterteilung: **31.01.2024**
(21) Anmeldenummer: 21737343.0
(22) Anmeldetag: 11.06.2021
(51) Int. Cl.: B22D 11/16, G01S 13/88

(54) **VERFAHREN UND VORRICHTUNG ZUM BERÜHRUNGSLOSEN BESTIMMEN VON ZUMINDEST EINER EIGENSCHAFT EINES ZUMINDEST TEILWEISE AUFGESCHMOLZENEN ENDLOSSTRANGES**
METHOD AND APPARATUS FOR THE CONTACTLESS DETERMINATION OF AT LEAST ONE PROPERTY OF AN AT LEAST PARTIALLY MELTED CONTINUOUS STRAND
PROCÉDÉ ET APPAREIL POUR LA DÉTERMINATION SANS CONTACT D'AU MOINS UNE PROPRIÉTÉ D'UN BRIN CONTINU AU MOINS PARTIELLEMENT FONDU

(30) Priorität: 11.06.2020 EP 20179440
(43) Veröffentlichungstag der Anmeldung: 19.04.2023
(73) Patentinhaber: Mecorad GmbH, 51105 Köln (DE)
(72) Erfinder: HEUTZ, Andreas, 53332 Bornheim (DE); ÜNLÜER, Cagdas, 45127 Essen (DE); BANASZAK, Marc, 40211 Düsseldorf (DE)
(74) Vertreter: Gruner, Leopold Joachim
(86) Internationale Anmeldenummer: PCT/EP2021/065872
(87) Internationale Veröffentlichungsnummer: WO 2021/250271

(56) Entgegenhaltungen:
- EP-A1- 3 628 416
- WO-A1-96/36449

## Beschreibung

### Technisches Gebiet

Die vorliegende Erfindung betrifft ein Verfahren zum berührungslosen Bestimmen von zumindest einer Eigenschaft eines zumindest teilweise aufgeschmolzenen quasi-endlosen Stranges während eines Gießvorganges des quasi-endlosen Stranges, welcher in einer Kühlzone abkühlt.

### Stand der Technik

Das Gießen von Metallen und Legierungen ist ein Fertigungsverfahren, bei dem individuell geformte Werkstücke (Gussstücke) aus flüssigem Metall - der Metallschmelze (bspw. Stahlschmelze) - hergestellt werden. Es gibt zahlreiche verschiedene Gießverfahren, die nach mehreren Kriterien eingeteilt werden können.

Das Gießen in Formen, die der Form des Fertigteils weitgehend entsprechen, ist das Formgießen, das am häufigsten eingesetzt wird. Daneben gibt es noch das Vergießen zu theoretisch endlosen Strängen, dem Strangguss.

Als Stranggießen oder Strangguss wird hierbei ein Endlosverfahren bezeichnet, dass sowohl zur diskontinuierlichen als auch kontinuierlichen Herstellung von Stranggussprodukten (z.B. (Walz-)Barren und Pressbolzen, auch Ronden genannt), aus Eisen- und Nichteisenlegierungen eingesetzt wird. Im Stahlwerk ist zudem die Bezeichnung (Walz-)Bramme gebräuchlich.

Die Technik des Stranggießens unterscheidet sich nur wenig, ob nun Stähle, Kupferlegierungen oder Aluminium verarbeitet werden. Der wesentliche Unterschied liegt bei den Temperaturen, die von ca. 700°C bei reinem oder legiertem Aluminium bis 1.400°C bzw. 1.550°C bei Stahl reichen.

Entsprechend der Kokillenanordnung wird zwischen horizontalem und vertikalem Stranggießen unterschieden, wobei ersteres speziell bei Kupferlegierungen und kleinformatigen Strängen angewandt wird.

Im Bereich der vertikalen Anlagen sind dem Fachmann Senkrecht-, Senkrechtbiege- und Bogenanlagen (insbesondere progressiver Abbiegung und Kreisbogen) bekannt. Hierbei erfolgt die Führung des Strangs nach Austritt aus der Kokille in der Kühlzone (K) über eine stützende Strangführung (bspw. ein Stützrollengerüst), welche senkrecht oder auf einem Bogensegment angeordnet sein kann. In diesem Bereich, insbesondere bei Senkrechtbiege- und Bogenanlage (auch Biegebereich genannt), ist der Kern des Strangs flüssig und härtet mit fortschreitendem Verlauf durch die Kühlzone (K) aus. Bei Senkrechtbiege- und Bogenanlage wird der Strang nach dem Erreichen der Horizontalen mittels eines Richtapparats gerichtet.

In einer Stranggießanlage sinkt die Temperatur des erhaltenen Gießstranges beim Erstarren an jeder Querschnittsposition des Gießstranges während der Herstellung von der analysenabhängig ca. 1.550°C betragenden Gießtemperatur bis unter 900°C, teilweise bis unter 700°C ab. Die Duktilität des eingesetzten Stahlwerkstoffes, die ein Bewertungskriterium für die Schwächung des Werkstoffes darstellt, weist in diesem Temperaturintervall lokale Minima auf. Bei der Durchführung des Gießprozesses wird daher auf die Temperaturführung besonderen Wert gelegt und diese so ausgewählt und eingestellt, dass in den risskritischen Biege- und Richtbereichen einer Stranggießanlage bei der Herstellung des Gießstranges die Duktilität hoch genug ist, um Risse zu vermeiden.

Beim Strangguss von Brammen (Walzbarren und Pressbolzen aus Stahl) wird der flüssige Stahl in Kupferkokillen gegossen, welche nach unten offen und wassergekühlt sind. Durch diese Öffnung tritt der Stahl in den Außenbereichen in erstarrter Form aus und wird kontinuierlich über Führungs- und Triebwalzen als Endlosstrang abgezogen. Auf dem Weg von der senkrechten in die über 15 Meter tiefer gelegene horizontale Lage kühlt der Stahlstrang auch im Inneren ab. Er wird hierzu kontinuierlich mit Wasser besprüht und besitzt aufgrund der raschen Abkühlung ein relativ zähes und festes Gefüge.

Stranggussprodukte werden auch als Halbzeug benannt, weil sie sich bis zum Endprodukt noch weiteren Bearbeitungsgängen unterziehen müssen. Walzen, Pressen und Tiefziehen kommen mehrheitlich zur Anwendung, verbunden mit einer vorausgehenden zeitlich terminierten Auslagerung bei Raum- bzw. Umgebungstemperatur, oder einer vor - bzw. nachgeschalteten thermischen Behandlung (Anlassen und Auslagern).

Diverse Verfahren zur Bestimmung von Eigenschaften, insbesondere Störungen während des Gießbetriebes sind aus dem Stand der Technik bekannt.

Zum Bestimmen von Eigenschaften werden insbesondere radiometrische Messsysteme, Ultraschallmesssysteme, Radarmesssysteme, optische Messsysteme (Laser, Kamera) und/oder Kraftmesssysteme eingesetzt. In einigen Situationen in der Stahlindustrie werden Röntgen- oder Isotopenlösungen für eine genaue Messung verwendet. Allerdings emittieren diese Technologien Strahlung und sind in der Wartung aufwendig.

Ultraschallmesssysteme und optische Messsysteme haben den Nachteil, dass schwierige Bedingungen in der Stahlindustrie, wie z.B. Wärmestrahlung, verdampftes Wasser aus der Kühlung und Staub die Messung mit Sensoren in vielen Positionen behindern, wo es vorteilhaft wäre geometrische Informationen über die Produktionsgüter zu erhalten. Ein Vergleich der Sensortechnologien zeigt, dass Ultraschall- oder optische Sensoren (Laser, Kamera) durch die Medien in der Atmosphäre eines Stahlwerks sehr negativ beeinflusst werden. Somit ist keines der vorgenannten Messsysteme in der Lage, mit all diesen störenden Faktoren gleichzeitig fertig zu werden und gleichzeitig die hochpräzisen Werte einer Laborsituation zu reproduzieren.

Radar kann durch all diese Zonen messen. Trotz der Tatsache, dass die Radartechnologie auf den ersten Blick in einer Laborsituation weniger genau zu sein scheint als ein Laser in einem Labor, behält das Radar seine Präzision in der realen Atmosphäre eines Stahlwerks. Radarsensoren senden allgemein eine elektromagnetische Welle aus, die auf einer Technologie basiert, die einem Mobiltelefon ähnelt. Die Strahlung ist vielfach, vorzugsweise 1000-mal geringer als die eines normalen Mobiltelefons.

Eine besondere Herausforderung stellt bei solchen Messanordnungen die Positionierung der Messeinrichtung dar. Die hohen Temperaturen des Stranges vor dem Durchlaufen der Kühlzone erschweren die Messungen in diesem Bereich und setzen die Messeinrichtung negativen Einflüssen aus, insbesondere hohen Temperaturen und Wärmestrahlung, die ihre Funktionstüchtigkeit beeinträchtigen können.

Aus der DE 10 2018 108 696 A1 ist beispielsweise ein optisches Messverfahren zum berührungslosen Bestimmen der Abmessung einer bewegten Materialbahn zu entnehmen.

Aus der WO 96/36449 ist ein Verfahren zum kontinuierlichen Gießen von Stahl in einer Gussform bekannt. Hierbei werden verflüssigter Stahl und synthetischer Schlack durch Rohre in die Gussform transferiert, wobei die Rohre sich durch eine wärmeisolierende Abdeckung erstrecken. Hierbei wird mit Hilfe einer Radar-Messeinrichtung oder anderer strahlungsbasierter Messeinrichtungen der Zufluss von verflüssigtem Stahl und synthetischem Schlack so kontrolliert, dass sich die Oberflächen der Materialien kontinuierlich im gleichen vordefinierten Abstand von der Abdeckung befinden. Dieses Verfahren basiert auf der Positionsbestimmung des verflüssigten Stahls und des Schlacks in Bezug auf die wärmeisolierende Abdeckung. Es werden keine Messgrößen bezüglich der Eigenschaften des Materials wie bspw. Dichte, Breite, Temperatur und Homogenität getroffen.

Aus der EP 3 628 416 A1 sind sowohl ein Verfahren und eine Anlage zum Stranggießen eines metallischen Produkts bekannt, umfassend eine Kokille, eine sich an die Kokille anschließende stützende Strangführung, entlang der ein aus der Kokille insbesondere senkrecht nach unten austretender Strang in Förderrichtung transportiert werden kann. Hierbei ist von großer Bedeutung, dass der Strang bereits innerhalb der stützenden Strangführung (d.h. innerhalb der Kühlzone) vollkommen erhärtet, bzw. durcherstarrt, um das Ausbrechen des flüssigen Metallkerns zu verhindern. Hierbei wird durch eine Radar-Messeinrichtung eine Dicke des Strangs an einer unmittelbar am Ende der stützenden Strangführung liegenden Messposition (d.h. der Kühlzone nachgeordnet) gemessen. Durch einen Vergleich mit einer vorbestimmten Dicke des Strangs mittels einer mit der Radar-Messeinrichtung signaltechnisch gekoppelten Recheneinheit, wird ein Steuersignal erzeugt, mit dem mindestens ein Gießparameter entsprechend der gemessenen Abweichung angepasst werden kann.

Nachteilig an diesem Verfahren ist allerdings, dass der Strang zum Zeitpunkt der Messung bereits die stützende Strangführung komplett durchwandert hat. Treten in diesem Bereich Veränderungen der Dicke des Strangs auf, so wirken sich diese auf die stützende Strangführung aus und führen beispielsweise zu vermehrter Abnutzung der Stützrollen, insbesondere von Stützrollen bei Bogenanlagen durch die vermehrte Belastung im Bereich des Richtapparats.

In der EP 3 628 416 A1 wird lediglich die Dicke des Strangs als Messgröße in Betracht gezogen. Es können keine Aussagen über die Qualität des Gießprozesses im Hinblick auf Eigenschaften wie bspw. Breite, Dichte, Temperatur und Homogenität getroffen werden. Sollten an diesem Punkt oder im späteren Verfahren Mängel am Strang festgestellt werden, so führt dies zu erhöhtem Ausschuss.

### Aufgabe

Der vorliegenden Erfindung liegt daher die technische Aufgabe zugrunde, ein Verfahren zur sicheren Detektion von Störungen während des Gießbetriebes, insbesondere nach Ausgang von einer Kokille bereitzustellen, welche besonders präzise ist, Ressourcen schont und mannigfaltige Möglichkeiten für sukzessive Fehlerkorrekturen ermöglicht.

Zudem ist es Aufgabe der vorliegenden Erfindung, soweit wie möglich auf zusätzliche Sensorik zu verzichten, um den Wartungs- und Instandhaltungsaufwand so gering wie möglich zu halten.

Bei dem Endlosstrang kann es sich beispielsweise um eine Bahn aus Metall, zum Beispiel in Form einer Metallfolie, aus Papier, aus Kunststoff, aus einem lichtundurchlässigen Gewebe, aus einem Verbundwerkstoff oder aus einem mehrschichtigen Material handeln.

Die Materialbahn ist im Verhältnis zu ihrer Länge und Breite vorzugsweise flach ausgebildet und weist eine im Vergleich zu ihrer Breite große Länge auf. Bei der zu bestimmenden Abmessung der Materialbahn handelt es sich dann vorzugsweise um eine Breite.

Bevorzugt handelt es sich bei dem zumindest teilweise aufgeschmolzenen Endlosstrang um einen teilweise aufgeschmolzenen Metallendlosstrang (d.h. um eine Bahn aus Metall).

Ein Quasiendlosstrang oder quasi-endloser Strang ist ein langer, kontinuierlicher Strang. Dabei kann ein quasi-endloser Strang in tatsächlicher Hinsicht durchaus ein Ende haben, der quasi-endlose Strang ist also nur quasi endlos. Gemeint ist lediglich, dass das Verfahren beispielsweise derart geartet ist, dass es einen kontinuierlichen Betrieb und eine kontinuierliche Strangerzeugung zulässt. Der quasi-endlose Strang kann also tatsächlich irgendwo bzw. irgendwann endlich sein. In einem Beispiel ist eine Kokille, von der ausgehend ein quasi-endloser Strang erzeugt wird, zu einem Zeitpunkt leer. Der quasi-endlose Strang würde nun bei der weiteren Verfahrensdurchführung ein Ende bekommen, es sei denn, die Kokille würde mit weiterem Material befüllt, d.h. nachgefüllt, um weiteres Rohmaterial für eine kontinuierlich fortgeführte Strangerzeugung bereitzustellen.

Ein Beispiel für einen Metallendlosstrang ist die Brammenherstellung, insbesondere während des Stranggussverfahrens.

Je nach Form der Kokille können auch andere Querschnitte hergestellt werden. Bei quadratischen oder kreisförmigen Querschnitten spricht man hingegen nicht mehr von Brammen sondern von sogenannten **Knüppeln,** bei denen in einer Stranggießanlage flüssiges Metall als Bramme aus einer Kokille (K) vertikal nach unten in eine Förderrichtung ausgebracht wird, entlang einer Strangführung (S) geführt und in die Horizontale umgelenkt wird.

Die Kühlung in der Kokille wird als "primäres Kühlen" bezeichnet. In der Kokille bildet sich aufgrund der Stahlabkühlung und Erstarrung lediglich eine dünne Strangschale, insbesondere bildet sich die dünne Strangschale erst direkt nach Austritt des flüssigen Metalls aus der Kokille. Nach der Bildung dieser dünnen Strangschale verlässt der Strang die Kokille und wird über eine stützende Strangführung in der Kühlzone (K) (die auch als Sekundärkühlzone bezeichnet wird), welche sich an die Kokille anschließt bis zur vollständigen Aushärtung gekühlt (siehe Verein Deutscher Eisenhüttenleute (VEDh), Stahlfibel, Verlag Stahleisen, Düsseldorf, 2002).

Es gibt vertikale und horizontale Stranggussverfahren. Bei einem Vertikalverfahren gibt es häufig verschiedene Zonen (Biegezone, Kreiszone, Richtzone), in welchen der vertikale Strang eine Kurve durchläuft, sodass er zum Prozessende ebenfalls in einen Horizontalstrang überführt wird.

In einer ersten Kühlzone erfolgt häufig eine Intensivkühlung der Bramme dergestalt, dass in der oberflächennahen Randzone der Bramme eine Gefügeumwandlung von Austenit in Ferrit erfolgt.

Ein Grundgedanke der Erfindung ist, die Bandkantenlage bzw. die Bandbreite metallischer Bänder mit zwei oder mehreren Radarsensoren, vorzugsweise Hochfrequenzsensoren im Bereich 30 bis 300 GHz vom Typ FMCW: Frequency Modulated Continuous Wave, zu ermitteln.

### Diskussion der Erfindung und möglicher Ausführungsformen

Bei der vorliegenden Erfindung handelt es sich um eine Erfindung auf dem technischen Gebiete der RADAR-Technik. RADAR bedeutet "RAdio Detection And Ranging". Frei übersetzt bedeutet dies ungefähr "funkgestützte Ortung und Abstandsmessung".

Die Erfindung kann vor allem vorteilhaft in Zusammenhang mit dem Gebiete der Gusstechnik eingesetzt werden.

Wenngleich die etablierte Wortwahl eine Einschränkung auf Radiofrequenzen suggeriert, ist dies für die vorliegende Erfindung nicht unbedingt erforderlich und es können auch elektromagnetische Wellen sämtlicher anderer Frequenzen (u.a. auch optische) zum Einsatz kommen oder andere physikalische Wellenphänomene wie Schall und Ultraschall.

In einem vorhergehenden Teil wurden einschlägige Probleme des Standes der Technik auf dem Gebiete der RADAR-Technik beschrieben.

Die Probleme des Standes der Technik werden erfindungsgemäß gelöst durch das Verfahren nach Anspruch 1. Bevorzugte Ausführungsformen und Weiterbildungen werden durch die Unteransprüche definiert.

Demgemäß ist ein Verfahren zum berührungslosen Bestimmen von zumindest einer Eigenschaft eines zumindest teilweise aufgeschmolzenen quasi-endlosen Stranges während eines Gießvorganges des quasi-endlosen Stranges vorgesehen, welcher in einer Kühlzone (K) abkühlt, wobei eine sukzessive Aushärtung des quasi-endlosen Stranges ermöglicht wird, umfassend zumindest die folgenden Schritte: Emittieren eines ersten Signales, insbesondere ersten RADAR-Signals, in der Form von Strahlung durch eine Emissionsvorrichtung, insbesondere einer RADAR-Emissionsvorrichtung, Erzeugen eines zweiten Signales, insbesondere zweiten Radarsignals, zumindest teilweise durch ein Wechselwirken (S02b) des ersten Signales mit einem Bereich des quasi-endlosen Stranges, Empfangen des zweiten Signales durch eine Empfangsvorrichtung, insbesondere durch eine Empfangsvorrichtung für Radarsignale, Bestimmen mindestens einer Eigenschaft des quasiendlosen Stranges auf Basis des zweiten Signals, dadurch gekennzeichnet, dass mindestens der Schritt des Wechselwirkens in der Kühlzone oder der Kühlzone (K) vorgelagert, insbesondere unmittelbar nach Ausgang von einer Kokille, erfolgt.

Die Erfindung schafft zudem eine Vorrichtung gemäß Anspruch 13. Demgemäß ist eine Vorrichtung zum Gießen eines Materials, insbesondere eines Metalls, zu einem quasiendlosen Strang im Rahmen eines Stranggussverfahrens und zum berührungslosen Bestimmen von zumindest einer Eigenschaft des zumindest teilweise aufgeschmolzenen quasi-endlosen Stranges während des Gießens des quasi-endlosen Stranges vorgesehen, umfassend: eine Kokille, welche dazu geeignet ist, den quasi-endlosen Strang zu formen, eine Kühlzone, in welcher der quasi-endlose Strang abkühlt, wobei eine sukzessive Aushärtung des quasi-endlosen Stranges ermöglicht wird, eine Emissionsvorrichtung, insbesondere einen Radarsender, welche dazu eingerichtet ist, ein erstes Signal in der Form von Strahlung zu emittieren, insbesondere als erstes Radarsignal, eine Empfangsvorrichtung, insbesondere einen Radarempfänger, ganz besonders bevorzugt ein Radarsensor, welche dazu eingerichtet ist, ein zweites Signal zu empfangen, insbesondere ein zweites Radarsignal, wobei das zweite Signal zumindest teilweise durch ein Wechselwirken des ersten Signales mit einem Bereich des quasi-endlosen Stranges in der Kühlzone oder der Kühlzone (K) vorgelagert, insbesondere unmittelbar nach Ausgang von einer Kokille, erzeugt wird, sowie eine Datenverarbeitungseinheit, welche dazu eingerichtet ist, mindestens eine Eigenschaft des quasi-endlosen Stranges auf Basis des zweiten Signals zu bestimmen.

Beispielsweise sind die Emissionsvorrichtung und die Empfangsvorrichtung als Sensor ausgebildet. So kann es beispielsweise von Vorteil sein, wenn der Radarsensor und der Radarempfänger als einziger Radarsensor (auch als Radar-Transceiver bezeichnet) ausgestaltet sind.

### Die Erfindung schafft zudem eine Verwendung einer Emissionsvorrichtung und einer

Empfangsvorrichtung gemäß Anspruch 14. Demgemäß ist eine Verwendung einer Emissionsvorrichtung und einer Empfangsvorrichtung, insbesondere für Radarsignale, zum berührungslosen Bestimmen von zumindest einer Eigenschaft eines zumindest teilweise aufgeschmolzenen quasi-endlosen Stranges während eines Gießvorganges des quasiendlosen Stranges, welcher in einer Kühlzone abkühlt, vorgesehen, wobei eine sukzessive Aushärtung des quasi-endlosen Stranges ermöglicht wird,
wobei die Emissionsvorrichtung und die Empfangsvorrichtung derart angeordnet sind, dass sie die zumindest eine Eigenschaft des quasi-endlosen Stranges in der Kühlzone oder der Kühlzone (K) vorgelagert, insbesondere unmittelbar nach Ausgang von einer Kokille, bestimmen.

Die bevorzugten Ausführungsformen und Weiterbildungen des Hauptanspruches lassen sich ebenso - einzeln oder in Kombination - mit den Nebenordnungen kombinieren.

Die Erfindung hat insbesondere den Vorteil, dass bereits in der Kühlzone oder der Kühlzone (K) vorgelagert, insbesondere unmittelbar nach Ausgang von einer Kokille, gemessen wird. Da der Schritt des Wechselwirkens in der Kühlzone oder der Kühlzone (K) vorgelagert, insbesondere unmittelbar nach Ausgang von einer Kokille, stattfindet, bezieht sich die bestimmte mindestens eine Eigenschaft auf den quasi-endlosen Strang in der Kühlzone oder der Kühlzone (K) vorgelagert, insbesondere unmittelbar nach Ausgang von einer Kokille. Diese Informationen über den quasi-endlosen Strang in der Kühlzone sind sehr wertvoll, da der Stranggussprozess zum Messzeitpunkt noch nicht sehr weit fortgeschritten ist. Die Messung erfolgt also im Hinblick auf den laufenden Stranggussprozess sehr frühzeitig.

So kann Material eingespart werden. Beispielsweise kann ein fehlerhafter Prozess frühzeitig erkannt und frühzeitig abgebrochen werden, wodurch Ressourcen eingespart werden. In einem weiteren Beispiel kann ein so erkannter Fehler effektiv korrigiert werden, da das fehlerhafte Material des quasi-endlosen Stranges noch nicht in den vollständig abgekühlten, festen Aggregatzustand überführt wurde. Da das Material beispielsweise noch besser formbar ist und eventuelle Parameter des Abkühlvorganges noch angepasst werden können, ergeben sich vorteilhafte Korrektur- und Weiterverarbeitungsmöglichkeiten.

Die Messung in der Kühlzone oder der Kühlzone (K) vorgelagert, insbesondere unmittelbar nach Ausgang von einer Kokille, ist allgemein schwieriger zu realisieren bzw. kann ungenauer sein, da die physikalische Umgebung in der Kühlzone oder der Kühlzone (K) vorgelagert, insbesondere unmittelbar nach Ausgang von einer Kokille, mit den Messverfahren interagiert bzw. diese stört. Insbesondere haben sich hier Messungen mit elektromagnetischen Wellen des Radiospektrums oder diesem Spektrum angrenzende Bereiche als besonders robust erwiesen, sodass sie hierdurch ein besonders robustes und belastbares Verfahren bereitstellen. Trotz der Tatsache, dass die Radartechnologie auf den ersten Blick in einer Laborsituation weniger genau zu sein scheint als ein Laser in einem Labor, behält das Radar seine Präzision in der realen Atmosphäre eines Stahlwerks, insbesondere auch, wenn im Bereich der Kühlzone oder der Kühlzone (K) vorgelagert, insbesondere unmittelbar nach Ausgang von einer Kokille, am Strang gemessen wird oder gar die Messapparaturen im Bereich der Kühlzone oder der Kühlzone (K) vorgelagert, insbesondere unmittelbar nach Ausgang von einer Kokille, in welcher der Strang immer noch eine sehr hohe Temperatur aufweist, angeordnet sind.

Wie zudem der Fachmann der Regelungstechnik erkennt, ergeben sich zahlreiche Möglichkeiten, die Erfindung mit geeigneten Regelkreisläufen zu kombinieren.

### Bevorzugte Ausführungsformen

Gemäß einer Weiterbildung umfasst das Verfahren ferner einen Schritt eines Handlings eines Fehlers oder einer Anomalität im quasi-endlosen Strang, welcher auf Basis der bestimmten Eigenschaften oder hieraus ermittelter Sekundärgrößen festgestellt wird, insbesondere durch einen Abbruch des Gießverfahrens oder eine Erzeugung eines Protokolls oder einer Anweisung, welche dazu geeignet ist, den vom Fehler betroffenen Bereich des quasi-endlosen Stranges nachträglich bei der weiteren Verarbeitung zu entfernen, weiterhin insbesondere durch Herausschneiden des vom Fehler betroffenen Bereichs bei einem sukzessiven Zerteilen des quasi-endlosen Stranges in Brammen.

Gemäß einer Weiterbildung ist dabei zumindest eine bestimmte Eigenschaft des quasiendlosen Stranges ausgewählt aus der Gruppe bestehend aus Abstand, Breite, Dicke, Dichte, Temperatur und Homogenität. Dadurch können verschiedene technisch relevante Eigenschaften effizient und frühzeitig ermittelt werden. Insbesondere kann ein Abstand gemessen werden. Beispielsweise ist ein bestimmter Abstand nützlich für die Einhaltung eines Sollabstandes, oder als Input für die Berechnung weiterer Größen wie beispielsweise der Breite des quasi-endlosen Stranges.

Gemäß einer Weiterbildung wird die Homogenität als Eigenschaft des quasi-endlosen Stranges bestimmt. Insbesondere kann die Homogenität durch Bestimmen der Oberflächenbeschaffenheit bzw. der Oberflächenstrukturierung des quasi-endlosen Stranges ermittelt werden. Während des Gießprozesses vibriert die Kokille in vertikaler Richtung. Dies ist erforderlich, damit die sich bildende Strangschale nicht an den Kokillenwänden haften bleibt. Durch die Vibration der Kokille in vertikaler Richtung während des Gießprozesses bilden sich allerdings an der Oberfläche des quasi-endlosen Stranges, insbesondere an dessen Schmalseiten, Veränderungen im (sub-)Millimeterbereich heraus. Die so entstehenden Rillen bezeichnet der Fachmann als Oszillationsmarken. In einer besonders bevorzugten Ausführung bestimmt die vorliegende Erfindung durch eine Rauheitsmessung der Oberflächenrauheit auf der Oberfläche des quasi-endlosen Stranges, und kann damit Aussagen über die Oszillationsmarken treffen, welche Rückschlüsse über die Homogenität und damit die Qualität des Gießprozesses zulassen. In einer ganz besonders bevorzugten Ausführung erfolgt das Bestimmen der Oberflächenrauheit mittels eines berührungslosen Verfahrens. Besonders bevorzugt werden hierbei Messverfahren basierend auf elektromagnetischen Wellen, zum Beispiel Radiofrequenzen, Ultraschall, Infrarot, oder optische Wellenlängen, insbesondere aber im Bereich von Radiofrequenzen (RADAR-Technik), wie bspw. durch ein Radarsignal verwendet. In einem bevorzugten Verfahren werden die Oszillationsmarken durch Differenzbildung zweier Abstände im (sub)Millimeterbereich bestimmt. Beispielsweise wird die Tiefe der Oszillationsmarken t bestimmt als t = x1 - x2, wobei x1 und x2 die bestimmten Abstände bezeichnen.

Nach einer Weiterbildung der Erfindung wird daher sowohl das Verfahren zum berührungslosen Bestimmen von zumindest einer Eigenschaft eines zumindest teilweise aufgeschmolzenen quasi-endlosen Stranges als auch die hierin definierte Vorrichtung zum Gießen eines Materials dazu verwendet, die Oszillationsmarken des quasi-endlosen Stranges, insbesondere auf dessen Oberfläche, vorzugsweise im Bereich der Kühlzone oder der Kühlzone (K) vorgelagert, insbesondere unmittelbar nach Ausgang von einer Kokille zu bestimmen.

Gemäß einer Weiterbildung werden die Schritte S01 bis S03 von zwei unterschiedlichen Standpunkten, insbesondere von zwei im Wesentlichen gegenüberliegend angeordneten Standorten in Bezug auf den quasi-endlosen Strang durchgeführt.

Gemäß einer Weiterbildung wird eine Breite des quasi-endlosen Stranges durch Differenzbildung der Summe zweier bestimmter Abstände und einer Entfernung der beiden unterschiedlichen Standpunkte voneinander bestimmt, oder es wird eine Breite des quasiendlosen Stranges durch Subtraktion zweier bestimmter Abstände von der Entfernung der beiden unterschiedlichen Standpunkte voneinander bestimmt, insbesondere wenn das Emittieren und das Empfangen im Wesentlichen in einem rechten Winkel zu einer Oberfläche des quasi-endlosen Stranges erfolgen.

So kann effizient die Breite des Stranges bestimmt und überwacht werden, um eventuelle Fehlerkorrekturmaßnahmen zu ergreifen. Beispielsweise wird so die Breite b bestimmt als b = d - x1 - x2, wobei x1 und x2 die zwei bestimmten Abstände bezeichnen und d die Entfernung der beiden unterschiedlichen Standpunkte voneinander bezeichnet. Beispielsweise kann auch b = d - (x1 + x2) berechnet werden.

Die Berechnung hat ein vorteilhaftes Verhalten im Hinblick auf Fehlerfortpflanzung.

Gemäß einer Weiterbildung wird eine Breite des quasi-endlosen Stranges durch Differenzbildung der Summe zweier bestimmter Abstände und einer Entfernung der beiden unterschiedlichen Standpunkte voneinander bestimmt, oder eine Breite des quasi-endlosen Stranges durch Subtraktion zweier bestimmter Abstände von der Entfernung der beiden unterschiedlichen Standpunkte voneinander bestimmt, wobei das Emittieren und das Empfangen im Wesentlichen in einem rechten Winkel zu einer Oberfläche des quasiendlosen Stranges erfolgen, wobei zudem bei der Bestimmung mindestens eines der beiden Abstände eine trigonometrische Funktion eingesetzt wird, um den Effekt einer Winkelabweichung von der rechtwinkligen Messung zu korrigieren. Dadurch wird die Berechnung genauer.

In einem Beispiel wird ein Laufweg oder eine Laufzeit mit einem Kosinus eines Winkels multipliziert. Beispielsweise ist dies der Einfallswinkel bzw. die Abweichung des Einfallswinkels vom rechten Winkel. Es kann auch die Hälfte des Winkels zwischen einfallendem und austretendem Signal sein.

Durch die korrekte Berücksichtigung des Winkels wird insbesondere eine unter einem Winkel vorgenommene Messung genauer. Hierdurch werden sukzessive Berechnungen genauer. Beispielsweise wird so ein effektiver gemittelter Gesamtabstand der Emissions- und Empfangsvorrichtung vom Strang genauer bestimmt, und hierdurch kann sukzessive die Breite des Stranges genauer berechnet werden.

Gemäß einer Weiterbildung ist zwischen der Emissionsvorrichtung und dem quasi-endlosen Strang eine Wand (51, 52, 61, 62) angeordnet, wobei die Wand (51, 52, 61, 62) eine Aussparung (7) aufweist, durch welche eine Signalausbreitung ermöglicht wird. Eine solche Wand (51, 52, 61, 62) bietet Schutz, beispielsweise vor Temperatur. Die Aussparung ermöglicht eine Messung. Die Messung ist aufgrund der Aussparung besonders fokussiert.

Gemäß einer Weiterbildung ist die Aussparung derart dimensioniert, dass ein effektiver Öffnungswinkel für die Emissionsvorrichtung gebildet wird, der höchstens 80% des Emissionsöffnungswinkels der Emissionsvorrichtung beträgt. So entsteht durch die Aussparung ein effektiver Öffnungswinkel, der signifikant kleiner ist als der Emissionsöffnungswinkels der Emissionsvorrichtung. Dies ermöglicht eine noch besser fokussierte und im Ergebnis sehr genaue Messung.

Gemäß einer Weiterbildung beträgt der Abstand zwischen der Emissionsvorrichtung und der Wand (51, 52, 61, 62) mindestens 10 cm. Dies schützt vor Temperatur und ist sehr einfach zu warten und zu reinigen.

Gemäß einer Weiterbildung wird der quasi-endlose Strang in einem Stranggussverfahren erzeugt. Bei einem solchen Stranggussverfahren wird teures Rohmaterial beim hoher Temperatur und höchsten Energieaufwendungen verarbeitet.

Die Kostenersparnis durch den Einsatz der Erfindung sind daher bei Einsatz der Erfindung im Rahmen eines Stranggussverfahrens besonders hoch. Hierdurch können nämlich Fehler frühzeitig erkannt und ggf. korrigiert werden. Dadurch werden Material, Energie, Arbeitsaufwand und sonstige Ressourcen effizient eingespart.

Erfindungsgemäß wird die Emissionsvorrichtung und/oder die Empfangsvorrichtung in der Kühlzone oder der Kühlzone (K) vorgelagert, insbesondere unmittelbar nach Ausgang von einer Kokille, angeordnet. Da erfindungsgemäß am Strang in der Kühlzone oder der Kühlzone (K) vorgelagert, insbesondere unmittelbar nach Ausgang von einer Kokille, gemessen wird, wird durch die Anordnung der Emissionsvorrichtung und/oder der Empfangsvorrichtung in der Kühlzone oder der Kühlzone (K) vorgelagert, insbesondere unmittelbar nach Ausgang von einer Kokille, ein effizienter Vorrichtungsaufbau und eine kurze Signalwegstrecke erreicht. Dadurch kann die Vorrichtung sehr präzise arbeiten.

Gemäß einer Weiterbildung umfasst die Emissionsvorrichtung und die Empfangsvorrichtung eine gemeinsam genutzte Vorrichtung, insbesondere einen gemeinsamen Radar-Transceiver. Hierdurch werden Kosten eingespart, da nur ein Gerät benötigt wird. Zudem kann besonders einfach im rechten Winkel am Strang gemessen werden. In vielen RADAR-Setups ist so auch nur eine einzelne Kalibrierung erforderlich.

Gemäß einer Weiterbildung kommt beim Stranggussverfahren eine Kokille zum Einsatz kommt, durch die der quasi-endlose Strang gebildet wird, wobei die Schritte S01 bis S03 unmittelbar der Kokille nachgeordnet durchgeführt werden.

Gemäß einer Weiterbildung ist die Emissionsvorrichtung und/oder die Empfangsvorrichtung durch eine Blende geschützt, die aus PTFE, welches zumindest bis zu einer Temperatur von 260°C stabil ist, und/oder Keramik, welche zumindest bis zu einer Temperatur von 1.400°C stabil ist, gebildet ist.

Die Blende schützt die jeweilige Vorrichtung effizient vor Temperatur und anderen Umwelteinflüssen.

Gemäß einer Weiterbildung ist die Emissionsvorrichtung und/oder die Empfangsvorrichtung durch eine erste Blende geschützt, welche insbesondere als Lochblende ausgestaltet ist, und ferner das Loch durch eine zweite Blende abgedeckt ist, wobei die zweite Blende aus PTFE gebildet ist. Dies kombiniert einen guten Schutz mit guten Emissions- bzw. Empfangscharakteristika der jeweiligen Vorrichtung.

Gemäß einer Weiterbildung umfasst die Emissionsvorrichtung und/oder die Empfangsvorrichtung eine Linsenkonstruktion. Dies dient beispielsweise einer Fokussierung der elektromagnetischen Wellen und trägt hierdurch zu einer präzisen Messung bei.

Gemäß einer Weiterbildung umfasst die Emissionsvorrichtung und/oder die Empfangsvorrichtung eine Hornantenne und/oder eine Phased-Array-Antenne. Hornantennen und phasengesteuerte Gruppenantennen haben für den Einsatz im Zusammenhang mit der vorliegenden Erfindung besonders geeignete Strahlungscharakteristika. Im Allgemeinen können verschiedene Richtfunkantennen im Zusammenhang mit der Erfindung zum Einsatz kommen.

Gemäß einer Weiterbildung wird die Erfindung im Dauerstrichmodus betrieben, insbesondere frequenzmoduliert und insbesondere als Dauerstrichradar. Dies ist für den vorgesehenen Zweck besonders gut geeignet und besonders präzise. Zudem ermöglicht es eine kontinuierliche Überwachung.

### Figurenliste

Die vorliegende Erfindung wird nachfolgend anhand der in den schematischen Figuren der Zeichnungen angegebenen Ausführungsbeispiele näher erläutert. Es zeigen dabei:
Fig. 1 eine Vorrichtung für die Durchführung eines Stranggussverfahrens (Stranggießanlage);
Fig. 2 eine Vorrichtung für die Durchführung eines Stranggussverfahrens (Stranggießanlage), die für das erfindungsgemäße Verfahren gemäß einer Ausführungsform vorgesehen ist, welche insbesondere dazu eingerichtet ist, eine Dicke eines quasiendlosen Stranges zu bestimmen;
Fig. 3 eine Vorrichtung für die Durchführung eines Stranggussverfahrens (Stranggießanlage), die für das erfindungsgemäße Verfahren gemäß einer Ausführungsform vorgesehen ist, welche insbesondere dazu eingerichtet ist, eine Dicke eines quasiendlosen Stranges zu bestimmen;
Fig. 4 eine Vorrichtung für die Durchführung eines Stranggussverfahrens (Stranggießanlage), die für das erfindungsgemäße Verfahren gemäß einer Ausführungsform vorgesehen ist, welche insbesondere dazu eingerichtet ist, eine Dicke eines quasiendlosen Stranges zu bestimmen;
Fig. 5 eine vereinfachte schematische Darstellung einer Vorrichtung für die Durchführung eines Stranggussverfahrens (Stranggießanlage), die für das erfindungsgemäße Verfahren gemäß einer Ausführungsform vorgesehen ist, welche insbesondere dazu eingerichtet ist, eine Breite eines quasiendlosen Stranges zu bestimmen.

### Figurenbeschreibungen

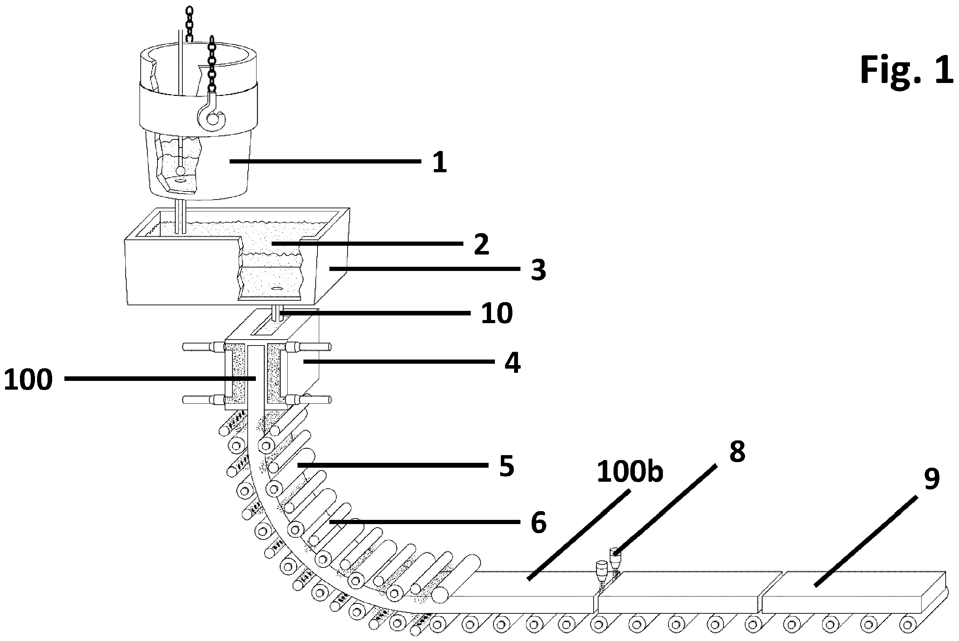

Eine Stranggießanlage arbeitet herkömmlicherweise wie in Fig. 1 dargestellt. Der Stranggießanlage wird flüssiger Stahl 2 oder eine Metallschmelze 2 in eine unten offene Gießform 4, die Kokille 4, gefüllt. Im Bereich der Kokille 4 findet eine Primärkühlung statt. Es fließt die noch flüssige Metallschmelze mit ca. 1.600°C in einen Kanal, der ebenso als Kokille bezeichnet wird, wo die Metallschmelze abgekühlt wird. Über die Kokillenwände wird Wärme abgeführt, so dass das Metall erstarrt und eine tragfähige Schale bildet. Das heißt, während des Abkühlvorgangs bildet sich äußerlich eine Kruste. Die Erstarrungstemperatur von z. B. Stahl liegt je nach Zusammensetzung bei ca. 1.150°C bis 1.500°C. Die so genannte Strangschale beinhaltet einen flüssigen Kern. Die erstarrte Strangschale wird kontinuierlich aus der Kokille gezogen und durch Rollen 5 gestützt weitergeleitet. Bei der primären Kühlstation wird herkömmlicherweise mit Hilfe von einer Wasserkühlung in den Kokillen ca. 12% der Energie des Metalls entzogen. Die Kokillenwände bestehen typischerweise aus beschichteten oder unbeschichteten Kupferplatten. An der Rückseite der Kupferplatten wird durch den Kontakt mit Kühlwasser gekühlt. Das Kühlwasser wird dabei durch die dafür zwischen Kokillenwand und Stützplatten vorgesehenen Kühlschlitzen oder Kühlspalten gepumpt. Die Durchflussrate des Kühlwassers ist hoch und so gewählt, dass eine Erwärmung um 6 bis 15°C erreicht wird. Die in der Kokille erreichte Wärmeabfuhr von ca. 2 Megawatt pro Quadratmeter ist hoch. Die Energie wird ungenutzt über den Wärmetauscher abgeführt und kann in dieser Form nicht einer Rückgewinnung zugeführt werden. Nach der ersten Station, der Kokille, folgt eine sekundäre Kühlung durch Sprühkühlung mit Wasser oder einem Luft-Wassergemisch. In der Sekundärkühlung wird dem Strang durch Spritzwasserkühlung 6, Strahlung und geschlossener Maschinenkühlung Wärme entzogen, bis eine Durcherstarrung erfolgt oder die Stabilität der Schale ohne Kühlung gewährleistet ist. Der erstarrte Metallstrang wird danach in Blöcke, den so genannten Brammen, Vorblöcke oder Knüppel oder Strangstücke geschnitten und weiterverarbeitet oder zwischengelagert. Der Energieinhalt dieser Blöcke oder Strangstücke entspricht immer noch ca. 50% des Energieinhalts des flüssigen Metalls.

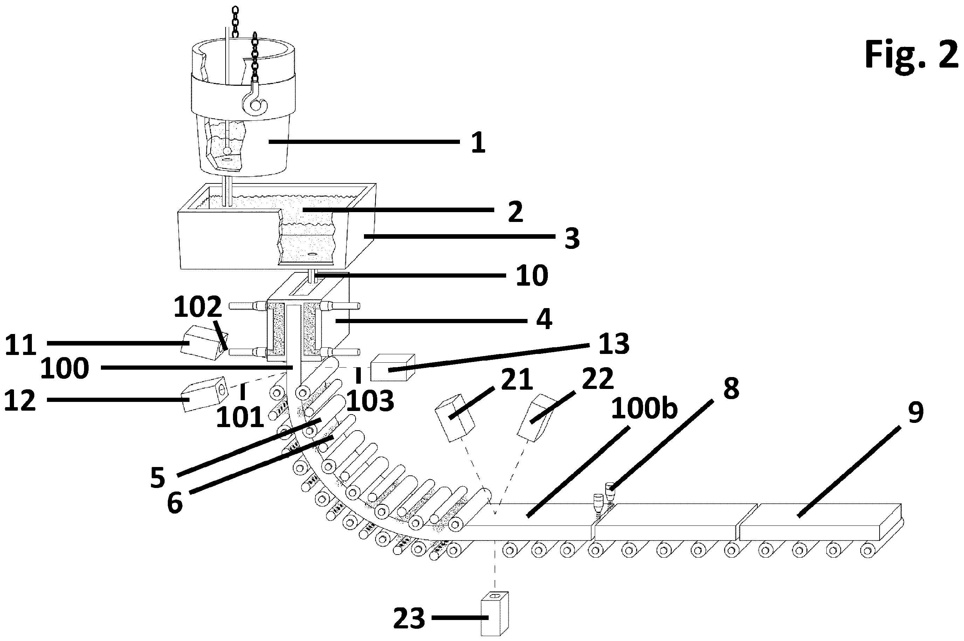

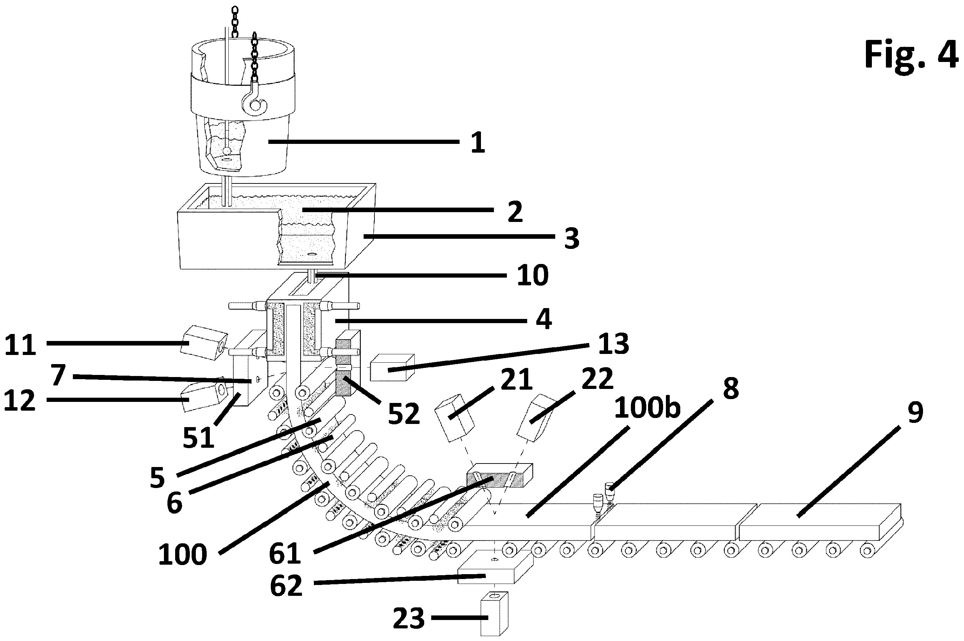

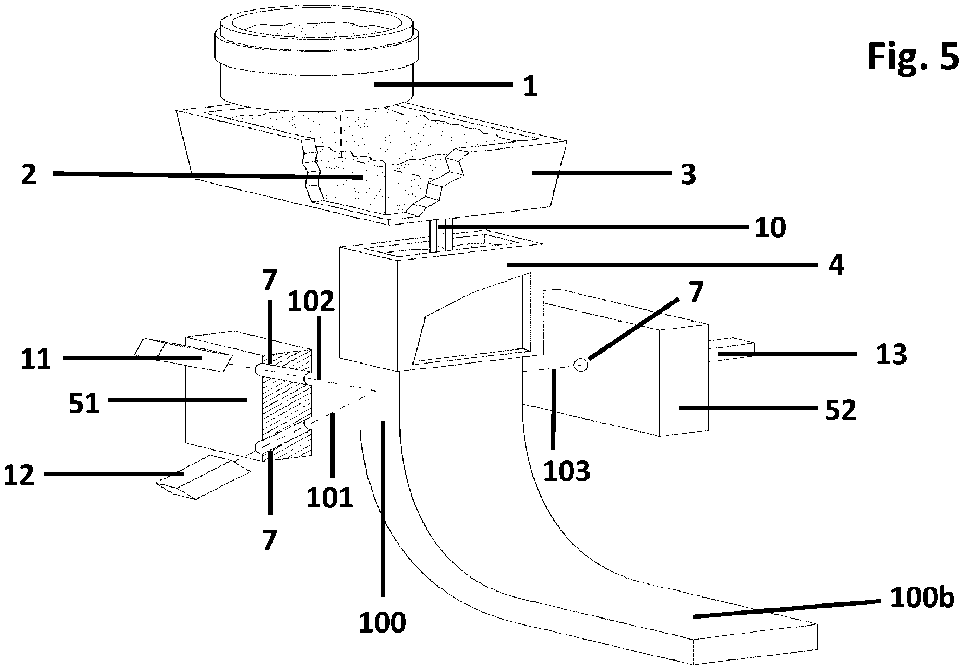

Die Figuren 1 - 5 zeigen Stranggießanlagen und werden im Folgenden - soweit möglich - gemeinsam beschrieben. Dabei sind die Vorrichtungen der Figuren 2 - 5 dazu eingerichtet, dass die vorliegende Erfindung zum Einsatz gebracht werden kann. Die Vorrichtungen der Figuren 2, 3 und 4 sind insbesondere dazu eingerichtet, dass die vorliegende Erfindung zur Bestimmung einer Dicke eines quasiendlosen Stranges zum Einsatz gebracht werden kann. Die Vorrichtung der Figur 5 ist insbesondere dazu eingerichtet, dass die vorliegende

Erfindung zur Bestimmung einer Breite eines quasiendlosen Stranges zum Einsatz gebracht werden kann. Für zahlreiche Prozesse ist die Bestimmung einer Breite besonders relevant.

Die Pfanne 1 umfasst eine flüssige Metallschmelze 2, welche von dort in den Verteiler 3 fließt, und von dort über das Gießrohr 10 sukzessive in die Kokille 4, wodurch der quasi-endlose Strang 100 gebildet wird.

Dargestellt ist in allen Figuren ein vertikales Gießverfahren, die Erfindung kann aber auch bei anderen Gießverfahren wie beispielsweise einem horizontalen Gießverfahren zum Einsatz kommen.

Die Erzeugung und sukzessive Abkühlung des Stranges erfolgen beispielsweise wie weiter oben beschrieben. Führung und sukzessive Kühlung des Stranges erfolgen hier durch die Rollen/Walzen 5 und die Kühlvorrichtungen 6.

Der fertige Endlosstrang 100b wird beispielsweise durch eine Schneidvorrichtung 8 wie z.B. einen oder mehrere Schneidbrenner oder einen oder mehrere Plasmabrenner 8 zerteilt, beispielsweise in Brammen 9 oder Knüppel.

In der Figur 2 wird an der Vorrichtung das erfindungsgemäße Verfahren praktiziert.

Insbesondere sind eine RADAR-Emissionsvorrichtung 11, eine RADAR-Empfangsvorrichtung 12 und ein RADAR-Transceiver 13 abgebildet, die dazu eingerichtet sind, bei einem erfindungsgemäßen Verfahren zum Einsatz zu kommen.

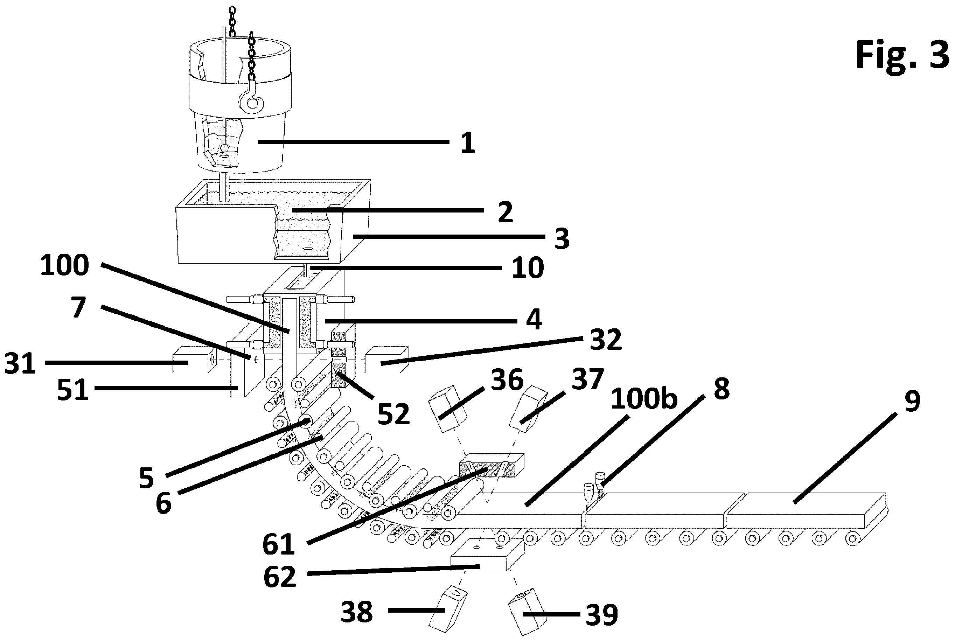

In diesem Beispiel kommen linksseitig eine RADAR-Emissionsvorrichtung 11 und eine hiervon getrennte RADAR-Empfangsvorrichtung 12 zum Einsatz. Rechtsseitig kommt in diesem Beispiel der RADAR-Transceiver 13 zum Einsatz. Bei dieser Anordnung handelt es sich jedoch lediglich um ein Beispiel. Sowohl links- als auch rechtsseitig kann - unabhängig voneinander - eine Wahl getroffen werden, ob ein Transceiver oder getrennte Emissions- und Empfangsvorrichtung zum Einsatz gebracht werden sollen. Sämtliche kombinatorische Wahlen (1. links: Transceiver, rechts: Transceiver; 2. links: Transceiver, rechts: Transmitter+ Receiver; 3. links: Transmitter + Receiver, rechts: Transceiver; 1. links: Transmitter + Receiver, rechts: Transmitter + Receiver) sind mit der vorliegenden Erfindung kompatibel. Beispielsweise sind in der Figur 3 zwei RADAR-Transceiver 31 und 32 abgebildet.

Eine weitere, d.h. zusätzliche, Messung ist auch am Horizontalstrang möglich. In der Figur 2 sind hierzu eine RADAR-Emissionsvorrichtung 21, eine RADAR-Empfangsvorrichtung 22 sowie ein RADAR-Transceiver 23 abgebildet. Eine zusätzliche Messung hat zahlreiche Vorteile. Beispielsweise kann so am Horizontalstrang überprüft werden, ob ein zuvor im Rahmen einer ersten Messung am Vertikalstrang festgestellter Fehler beseitigt werden konnte. Auch ist das Material viel weiter abgekühlt und die Messung liefert daher Messwerte, die näher an den Messwerten des fertigen Produktes sind.

Bei dieser Anordnung einer RADAR-Emissionsvorrichtung 21, einer RADAR-Empfangsvorrichtung 22 sowie einem RADAR-Transceiver 23 in der Figur 2 handelt es sich jedoch ebenso lediglich um ein Beispiel. Sowohl ober- als auch unterseitig kann - unabhängig voneinander - eine Wahl getroffen werden, ob ein Transceiver oder getrennte Emissions- und Empfangsvorrichtung zum Einsatz gebracht werden sollen. Sämtliche kombinatorische Wahlen (1. oben: Transceiver, unten: Transceiver; 2. oben: Transceiver, unten: Transmitter + Receiver; 3. oben: Transmitter + Receiver, unten: Transceiver; 1. oben: Transmitter + Receiver, unten: Transmitter + Receiver) sind dabei möglich und auch mit einer Kombination mit der erfindungsgemäßen Lehre kompatibel. Beispielsweise sind in der Figur 3 zwei RADAR-Emissionsvorrichtungen 36 und 38 sowie zwei RADAR-Empfangsvorrichtungen 37 und 39 abgebildet.

In sämtlichen Figuren ist die Positionierung von assoziierten Emissionsvorrichtungen und Empfangsvorrichtungen lediglich beispielhaft. Beispielsweise kann sich die RADAR-Emissionsvorrichtung 11 in der Figur 2 auch dort befinden, wo die RADAR-Empfangsvorrichtung 12 dargestellt ist, während sich sogleich die RADAR-Empfangsvorrichtung 12 dort befindet, wo die RADAR-Emissionsvorrichtung 11 dargestellt ist.

Die Figur 3 offenbart zudem Wände bzw. Abdeckungen 51, 52, 61, 62 mit Aussparungen, welche eine Signaltransmission ermöglichen. Die Aussparungen können auch mit einem geeigneten Material erfüllt sein. Die Vorteile der Wände bzw. Abdeckungen ergeben sich aus der Beschreibung der Erfindung und ihren Weiterbildungen.

Die Vorrichtung der Figur 5 ist insbesondere dazu eingerichtet, dass die vorliegende Erfindung zur Bestimmung einer Breite eines quasiendlosen Stranges zum Einsatz gebracht werden kann. Dies schlägt sich in der Figur 5 insbesondere in der Position und Ausrichtung der RADAR-Emissionsvorrichtung 11, der RADAR-Empfangsvorrichtung 12 und des RADAR-Transceivers 13 (und ggf. der Wände 51, 52). Die Ausrichtung der RADAR-Signale 101, 102, 103 ist ebenfalls entsprechend angepasst. Diese fallen in der Figur 5 auf die Seite des quasiendlosen Stranges 100 ein bzw. gehen hiervon aus.

Ebenfalls in der Figur 5 ist die Positionierung von assoziierten Emissionsvorrichtungen und Empfangsvorrichtungen lediglich beispielhaft. Beispielsweise kann sich die RADAR-Emissionsvorrichtung 11 in der Figur 5 auch dort befinden, wo die RADAR-Empfangsvorrichtung 12 dargestellt ist, während sich sogleich die RADAR-Empfangsvorrichtung 12 dort befindet, wo die RADAR-Emissionsvorrichtung 11 dargestellt ist.

In diesem Beispiel der Figur 5 kommen linksseitig eine RADAR-Emissionsvorrichtung 11 und eine hiervon getrennte RADAR-Empfangsvorrichtung 12 zum Einsatz. Rechtsseitig kommt in diesem Beispiel der RADAR-Transceiver 13 zum Einsatz. Bei dieser Anordnung handelt es sich jedoch lediglich um ein Beispiel. Sowohl links- als auch rechtsseitig kann - unabhängig voneinander - eine Wahl getroffen werden, ob ein Transceiver oder getrennte Emissions- und Empfangsvorrichtung zum Einsatz gebracht werden sollen. Sämtliche kombinatorische Wahlen (1. links: Transceiver, rechts: Transceiver; 2. links: Transceiver, rechts: Transmitter+ Receiver; 3. links: Transmitter + Receiver, rechts: Transceiver; 1. links: Transmitter + Receiver, rechts: Transmitter + Receiver) sind mit der vorliegenden Erfindung kompatibel. Der Fachmann erkennt, dass sich die Begriffe "links" und "rechts", welche sich auf die jeweilige Figur beziehen, hierbei im Rahmen der Figur 5 anders definieren als im Rahmen der Figuren 1 - 4.

Für zahlreiche Prozesse ist die Bestimmung einer Breite besonders relevant. Der Übersichtlichkeit halber ist Figur 5 vereinfacht dargestellt.

### Bezugszeichenliste

- 1: Pfanne
- 2: Schmelze
- 3: Verteiler
- 4: Kokille
- 5: Rolle/Walze
- 6: Kühlvorrichtung
- 7: Aussparung
- 8: Schneidevorrichtung
- 9: Bramme
- 10: Gießrohr
- 11: RADAR-Emissionsvorrichtung
- 12: RADAR-Empfangsvorrichtung
- 13: RADAR-Transceiver
- 21: RADAR-Emissionsvorrichtung
- 22: RADAR-Empfangsvorrichtung
- 23: RADAR-Transceiver
- 31: RADAR-Transceiver
- 32: RADAR-Transceiver
- 36: RADAR-Emissionsvorrichtung
- 37: RADAR-Empfangsvorrichtung
- 38: RADAR-Emissionsvorrichtung
- 39: RADAR-Empfangsvorrichtung
- 51: Wand/Abschirmung
- 52: Wand/Abschirmung
- 61: Wand/Abschirmung
- 62: Wand/Abschirmung
- 100, 100b: quasi-endloser Strang
- 101: zweites RADAR-Signal (Sekundärsignal)
- 102: erstes RADAR-Signal (Primärsignal)
- 103: erstes RADAR-Signal (Primärsignal) und zweites RADAR-Signal (Sekundärsignal), räumlich überlappend

### Weitere Offenbarungen

Die Erfindung umfasst insbesondere ein Verfahren wie hierin definiert, wobei beim Stranggussverfahren eine Kokille zum Einsatz kommt, durch die der quasi-endlose Strang gebildet wird, wobei die Schritte S01 bis S03 unmittelbar der Kokille nachgeordnet, d.h. der Kühlzone (K) vorgelagert durchgeführt werden.

Beispielsweise ein Verfahren vorgesehen sein, wobei die Emissionsvorrichtung und/oder die Empfangsvorrichtung durch eine Blende geschützt ist, die aus PTFE, welches zumindest bis zu einer Temperatur von 260°C stabil ist, und/oder Keramik, welche zumindest bis zu einer Temperatur von 1.400°C stabil ist, gebildet ist.

In einer Ausführungsform des Verfahrens kann vorgesehen sein, dass die Emissionsvorrichtung und/oder die Empfangsvorrichtung durch eine erste Blende geschützt ist, welche insbesondere als Lochblende ausgestaltet ist, und ferner das Loch durch eine zweite Blende abgedeckt ist, wobei die zweite Blende aus PTFE gebildet ist.

Vorteile durch den Schutz einer Blende, insbesondere einer Lochblende sind die erhöhte Güte und die daraus resultierende hohe Genauigkeit der Messanordnung. Darüber hinaus benötigt man keine zusätzliche Abstandsplatte (wie eine Wand oder Abschirmung) wie im Falle einer offenen oder zumindest halboffenen Messanordnung, sodass die Emissionsvorrichtung und/oder die Empfangsvorrichtung direkt in der Kühlzone positioniert werden können. Selbst im Falle maximaler Temperaturen, die beim Stranggießen entstehen können (wie hierin definiert) bleiben die Eigenschaften des quasi-endlosen Stranges (100, 100b) sehr gut bestimmbar.

In einer Ausführungsform des Verfahrens kann vorgesehen sein, dass die Emissionsvorrichtung und/oder die Empfangsvorrichtung eine Linsenkonstruktion umfassen. Basierend auf einer entsprechenden Linsenkonstruktion können bspw. durch hohe Temperaturen, die beim Stranggießen entstehen (wie hierin definiert) mögliche entstehende Abweichungen (d.h. Aberration oder Abbildungsfehler), die während der Bestimmung mindestens einer Eigenschaft des quasi-endlosen Stranges (100, 100b) entstehen können, ausgeglichen werden.

## Patentansprüche

1. **Verfahren** zum berührungslosen Bestimmen von zumindest einer Eigenschaft eines zumindest teilweise aufgeschmolzenen quasi-endlosen Stranges (100, 100b) während eines Gießvorganges des quasi-endlosen Stranges (100, 100b), welcher in einer Kühlzone (K) abkühlt, wobei eine sukzessive Aushärtung des quasi-endlosen Stranges (100, 100b) ermöglicht wird, umfassend zumindest die folgenden Schritte:
- Emittieren (S01) eines ersten Signales (102), insbesondere ersten Radarsignals (102), in der Form von Strahlung durch eine Emissionsvorrichtung (11, 13, 31, 32), insbesondere einer Radar-Emissionsvorrichtung (11, 13, 31, 32),
- Erzeugen (S02a) eines zweiten Signales (101), insbesondere zweiten Radarsignals (101), zumindest teilweise durch ein Wechselwirken (S02b) des ersten Signales (102) mit einem Bereich des quasi-endlosen Stranges (100, 100b),
- Empfangen (S03) des zweiten Signales (101) durch eine Empfangsvorrichtung (12, 13, 31, 32), insbesondere durch eine Empfangsvorrichtung (12, 13, 31, 32) für Radarsignale,
- Bestimmen (S04) mindestens einer Eigenschaft des quasi-endlosen Stranges (100, 100b) auf Basis des zweiten Signals (101),
**dadurch gekennzeichnet, dass** mindestens der Schritt des Wechselwirkens (S02b) in der Kühlzone (K) oder der Kühlzone (K) vorgelagert erfolgt.

2. Verfahren nach Anspruch 1, wobei das Verfahren ferner umfasst:
- einen Schritt eines Handlings (S05) eines Fehlers oder einer Anomalität im quasiendlosen Strang (1), welcher auf Basis der bestimmten Eigenschaften oder hieraus ermittelter Sekundärgrößen festgestellt wird, insbesondere durch einen Abbruch des Gießverfahrens oder eine Erzeugung eines Protokolls oder einer Anweisung, welche dazu geeignet ist, den vom Fehler betroffenen Bereich des quasi-endlosen Stranges (9) nachträglich bei der weiteren Verarbeitung zu entfernen, weiterhin insbesondere durch Herausschneiden des vom Fehler betroffenen Bereichs bei einem sukzessiven Zerteilen des quasi-endlosen Stranges in Brammen.

3. Verfahren nach Anspruch 1 oder 2, wobei die zumindest eine bestimmte Eigenschaft des quasi-endlosen Stranges ausgewählt ist aus der Gruppe bestehend aus Abstand, Breite, Dicke, Dichte, Temperatur und Homogenität.

4. Verfahren nach einem der Ansprüche 1 bis 3, wobei die Schritte S01 bis S03 von zwei unterschiedlichen Standpunkten, insbesondere von zwei im Wesentlichen gegenüberliegend angeordneten Standorten in Bezug auf den quasi-endlosen Strang durchgeführt werden.

5. Verfahren nach Anspruch 4, wobei gemäß dem Schritt S04 eine Breite des quasiendlosen Stranges durch Differenzbildung der Summe zweier bestimmter Abstände und einer Entfernung der beiden unterschiedlichen Standpunkte voneinander bestimmt wird, oder wobei gemäß dem Schritt S04 eine Breite des quasi-endlosen Stranges durch Subtraktion zweier bestimmter Abstände von der Entfernung der beiden unterschiedlichen Standpunkte voneinander bestimmt wird, insbesondere wenn das Emittieren (S01) und das Empfangen (S02) im Wesentlichen in einem rechten Winkel zu einer Oberfläche des quasi-endlosen Stranges erfolgen.

6. Verfahren nach Anspruch 4, wobei gemäß dem Schritt S04 eine Breite des quasiendlosen Stranges durch Differenzbildung der Summe zweier bestimmter Abstände und einer Entfernung der beiden unterschiedlichen Standpunkte voneinander bestimmt wird, oder wobei gemäß dem Schritt S04 eine Breite des quasi-endlosen Stranges durch Subtraktion zweier bestimmter Abstände von der Entfernung der beiden unterschiedlichen Standpunkte voneinander bestimmt wird, wobei das Emittieren (S01) und das Empfangen (S02) im Wesentlichen in einem rechten Winkel zu einer Oberfläche des quasi-endlosen Stranges erfolgen, wobei zudem bei der Bestimmung (S04) mindestens eines der beiden Abstände eine trigonometrische Funktion eingesetzt wird, um den Effekt einer Winkelabweichung von der rechtwinkligen Messung zu korrigieren.

7. Verfahren nach einem der Ansprüche 1 bis 6, wobei zwischen der Emissionsvorrichtung und dem quasi-endlosen Strang eine Wand (51, 52, 61, 62) angeordnet ist, wobei die Wand eine Aussparung (7) aufweist, durch welche eine Signalausbreitung ermöglicht wird.

8. Verfahren nach Anspruch 7, wobei die Aussparung derart dimensioniert ist, dass ein effektiver Öffnungswinkel für die Emissionsvorrichtung gebildet wird, der höchstens 80% des Emissionsöffnungswinkels der Emissionsvorrichtung beträgt.

9. Verfahren nach einem der Ansprüche 1 bis 8, wobei der quasi-endlose Strang in einem Stranggussverfahren erzeugt wird.

10. Verfahren nach einem der Ansprüche 1 bis 9, wobei der Emissionsvorrichtung und/oder die Empfangsvorrichtung in der Kühlzone oder der Kühlzone (K) vorgelagert, insbesondere unmittelbar nach Ausgang von einer Kokille, angeordnet sind.

11. Verfahren nach einem der Ansprüche 1 bis 10, wobei die Emissionsvorrichtung und die Empfangsvorrichtung eine gemeinsam genutzte Vorrichtung, insbesondere einen gemeinsamen Radar-Transceiver, umfassen.

12. Verfahren nach einem der Ansprüche 9 bis 11, wobei die Emissionsvorrichtung und/oder die Empfangsvorrichtung eine Hornantenne und/oder eine Phased-Array-Antenne umfassen.

13. **Vorrichtung** zum Gießen eines Materials, insbesondere eines Metalls, zu einem quasi-endlosen Strang (100, 100b) im Rahmen eines Stranggussverfahrens und zum berührungslosen Bestimmen von zumindest einer Eigenschaft des zumindest teilweise aufgeschmolzenen quasi-endlosen Stranges (100, 100b) während des Gießens des quasi-endlosen Stranges (100, 100b), umfassend:
- eine Kokille (4), welche dazu geeignet ist, den quasi-endlosen Strang (100, 100b) zu formen,
- eine Kühlzone (K), in welcher der quasi-endlose Strang (100, 100b) abkühlt, wobei eine sukzessive Aushärtung des quasi-endlosen Stranges (100, 100b) ermöglicht wird,
- eine Emissionsvorrichtung (11, 13, 31, 32), insbesondere einen Radarsender (11, 13, 31, 32), welche dazu eingerichtet ist, ein erstes Signal (102, 103) in der Form von Strahlung zu emittieren, insbesondere als erstes Radarsignal (102, 103),
- eine Empfangsvorrichtung (12, 13, 31, 32), insbesondere einen Radarempfänger (12, 13, 31, 32), welche dazu eingerichtet ist, ein zweites Signal (101, 103) zu empfangen, insbesondere ein zweites Radarsignal (101, 103),
wobei das zweite Signal (101, 103) zumindest teilweise durch ein Wechselwirken des ersten Signales (102, 103) mit einem Bereich des quasi-endlosen Stranges (100, 100b) in der Kühlzone (K) oder der Kühlzone (K) vorgelagert erzeugt wird,
- eine Datenverarbeitungseinheit, welche dazu eingerichtet ist, mindestens eine Eigenschaft des quasi-endlosen Stranges (100, 100b) auf Basis des zweiten Signals (101, 103) zu bestimmen,
**dadurch gekennzeichnet, dass** die Emissionsvorrichtung und/oder die Empfangsvorrichtung derart angeordnet sind, dass sie die zumindest eine Eigenschaft des quasi-endlosen Stranges in der Kühlzone oder der Kühlzone (K) vorgelagert bestimmen.

14. **Verwendung** einer Emissionsvorrichtung (11, 13, 31, 32) und einer Empfangsvorrichtung (12, 13, 31, 32), insbesondere für Radarsignale (101, 102, 103), zum berührungslosen Bestimmen von zumindest einer Eigenschaft eines zumindest teilweise aufgeschmolzenen quasi-endlosen Stranges (100, 100b) während eines Gießvorganges des quasi-endlosen Stranges (100, 100b), welcher in einer Kühlzone (K) abkühlt, wobei eine sukzessive Aushärtung des quasi-endlosen Stranges (100, 100b) ermöglicht wird,
wobei die Emissionsvorrichtung (11, 13, 31, 32) und die Empfangsvorrichtung (12, 13, 31, 32) derart angeordnet sind, dass sie die zumindest eine Eigenschaft des quasiendlosen Stranges (100, 100b) in der Kühlzone (K) oder der Kühlzone (K) vorgelagert bestimmen.

15. **Verwendung** des Verfahrens nach einem der Ansprüche 1 bis 12 oder einer Emissionsvorrichtung nach Anspruch 13 zum berührungslosen Bestimmen von Oszillationsmarken des quasi-endlosen Stranges.

## Claims

1. **Method** for contactless determination of at least one property of an at least partially melted quasi-endless strand (100, 100b) during a casting process of the quasi-endless strand (100, 100b), which cools down in a cooling zone (K), whereby a successive hardening of the quasi-endless strand (100, 100b) is enabled, comprising at least the following steps:
- Emitting (S01) a first signal (102), in particular first radar signal (102), in the form of radiation by an emission device (11, 13, 31, 32), in particular a radar emission device (11, 13, 31, 32),
- generating (S02a) a second signal (101), in particular second radar signal (101), at least partly by interaction (S02b) of the first signal (102) with a region of the quasi-endless string (100, 100b),
- receiving (S03) the second signal (101) by a reception device (12, 13, 31, 32), in particular by a reception device (12, 13, 31, 32) for radar signals,
- determining (S04) at least one property of the quasi-endless string (100, 100b) on the basis of the second signal (101),
**characterized in that** at least the step of interacting (S02b) is performed within the cooling zone (K) or upstream of the cooling zone (K).

2. Method according to claim 1, the method further comprising:
- A step of handling (S05) a defect or anomaly in the quasi-endless strand (1), which is detected on the basis of the determined properties or secondary variables determined therefrom, in particular by aborting the casting process or generating a protocol or instruction, which is suitable for removing the region of the quasi-endless strand (9) affected by the defect subsequently during further processing, further in particular by cutting out the region affected by the defect during successive cutting of the quasi-endless strand into slabs.

3. Method according to claim 1 or 2, wherein the at least one particular property of the quasi-endless strand is selected from the group consisting of distance, width, thickness, density, temperature, and homogeneity.

4. Method according to any one of claims 1 to 3, wherein steps S01 to S03 are carried out from two different viewpoints, in particular from two substantially oppositely arranged positions with respect to the quasi-endless strand.

5. Method according to claim 4, wherein, according to step S04, a width of the quasi-endless string is determined by subtracting the sum of two certain distances and a distance of the two different positions from each other, or wherein, according to step S04, a width of the quasi-endless string is determined by subtracting two certain distances from the distance of the two different positions from each other, in particular when emitting (S01) and receiving (S02) are substantially at a right angle to a surface of the quasi-endless string.

6. Method according to claim 4, wherein according to step S04, a width of the quasi-endless string is determined by subtracting the sum of two certain distances and a distance of the two different positions from each other, or wherein according to step S04, a width of the quasi-endless string is determined by subtracting two certain distances from the distance of the two different positions from each other, wherein said emitting (S01) and said receiving (S02) are substantially at a right angle to a surface of said quasi-endless string, wherein, moreover, in said determining (S04) at least one of the two distances, a trigonometric function is employed to correct the effect of an angular deviation from said right angle measurement.

7. Method according to any one of claims 1 to 6, wherein a wall (51, 52, 61, 62) is arranged between the emission device and the quasi-endless strand, wherein the wall comprises a recess (7) through which signal propagation is enabled.

8. Method according to claim 7, wherein the recess is dimensioned to form an effective opening angle for the emission device that is at most 80% of the emission opening angle of the emission device.

9. Method according to any one of claims 1 to 8, wherein the quasi-endless strand is produced in a continuous casting process.

10. Method according to any one of claims 1 to 9, wherein the emission device and/or the reception device are arranged within the cooling zone or upstream of the cooling zone (K), in particular immediately after exit from a mold.

11. Method according to any one of claims 1 to 10, wherein the emission device and the reception device comprise a shared device, in particular a shared radar transceiver.

12. Method according to any one of claims 9 to 11, wherein the emission device and/or the reception device comprise a horn antenna and/or a phased array antenna.

13. **Device** for casting a material, in particular a metal, into a quasi-endless strand (100, 100b) in the course of a continuous casting process and for contactless determination of at least one property of the at least partially melted quasi-endless strand (100, 100b) during casting of the quasi-endless strand (100, 100b), comprising:
- a mold (4) which is suitable to form the quasi-endless strand (100, 100b),
- a cooling zone (K) in which the quasi-endless strand (100, 100b) cools down, whereby successive hardening of the quasi-endless strand (100, 100b) is enabled,
- an emission device (11, 13, 31, 32), in particular a radar emitter (11, 13, 31, 32), which is arranged to emit a first signal (102, 103) in the form of radiation, in particular as a first radar signal (102, 103),
- a reception device (12, 13, 31, 32), in particular a radar receiver (12, 13, 31, 32), which is set up to receive a second signal (101, 103), in particular a second radar signal (101, 103), whereby the second signal (101, 103) being generated at least partly by an interaction of the first signal (102, 103) with a region of the quasi-endless strand (100, 100b) within the cooling zone (K) or upstream of the cooling zone (K),
- a data processing unit adapted to determine at least one characteristic of the quasi-endless strand (100, 100b) based on the second signal (101, 103).

14. **Use** of an emission device (11, 13, 31, 32) and a reception device (12, 13, 31, 32), in particular for radar signals (101, 102, 103), for contactless determination of at least one property of an at least partially melted quasi-endless strand (100, 100b) during a casting process of the quasi-endless strand (100, 100b), which cools down within a cooling zone (K), whereby a successive hardening of the quasi-endless strand (100, 100b) is enabled,
wherein the emission device (11, 13, 31, 32) and the reception device (12, 13, 31, 32) are arranged to determine the at least one property of the quasi-endless strand (100, 100b) within the cooling zone (K) or upstream of the cooling zone (K).

15. Use of the method according to any one of claims 1 to 12 or an emission device according to claim 13 for contactless determination of oscillation marks of the quasi-endless strand.

## Revendications

1. **Procédé** de détermination sans contact d'au moins une propriété d'une ligne de coulée quasi infinie (100, 100b) au moins partiellement fondue pendant une opération de coulée de la ligne de coulée quasi infinie (100, 100b), laquelle refroidit dans une zone de refroidissement (K), un durcissement successif de la ligne de coulée quasi infinie (100, 100b) étant rendu possible, comprenant au moins les étapes suivantes :
- émission (S01) d'un premier signal (102), notamment d'un premier signal radar (102), sous la forme d'un rayonnement par un dispositif d'émission (11, 13, 31, 32), notamment un dispositif d'émission radar (11, 13, 31, 32),
- génération (S02a) d'un deuxième signal (101), notamment d'un deuxième signal radar (101), au moins partiellement par une interaction (S02b) du premier signal (102) avec une zone de la ligne de coulée quasi infinie (100, 100b),
- réception (S03) du deuxième signal (101) par un dispositif de réception (12, 13, 31, 32), notamment par un dispositif de réception (12, 13, 31, 32) de signaux radars,
- détermination (S04) d'au moins une propriété de la ligne de coulée quasi infinie (100, 100b) sur la base du deuxième signal (101),
**caractérisé en ce qu'**au moins l'étape d'interaction (S02b) est effectuée dans la zone de refroidissement (K) ou en amont de la zone de refroidissement (K).

2. Procédé selon la revendication 1, le procédé comprenant en outre :
- une étape de traitement (S05) d'un défaut ou d'une anomalie dans la ligne de coulée quasi infinie (1), lequel est constaté sur la base des propriétés déterminées ou de grandeurs secondaires déterminées à partir de celles-ci, notamment par une interruption du procédé de coulée ou une génération d'un compte-rendu ou d'une instruction, qui est appropriée pour éliminer ultérieurement la zone de la ligne de coulée quasi infinie (9) concernée par le défaut lors de la poursuite du traitement, en outre notamment par découpe de la zone concernée par le défaut lors d'un découpage successif de la ligne de coulée quasi infinie en brames.

3. Procédé selon la revendication 1 ou 2, l'au moins une propriété déterminée de la ligne de coulée quasi infinie étant choisie dans le groupe constitué par l'écart, la largeur, l'épaisseur, la densité, la température et l'homogénéité.

4. Procédé selon l'une des revendications 1 à 3, les étapes S01 à S03 étant exécutées depuis deux points de vue différents, notamment depuis deux emplacements disposés de manière sensiblement opposée en référence à la ligne de coulée quasi infinie.

5. Procédé selon la revendication 4, avec lequel, selon l'étape S04, une largeur de la ligne de coulée quasi infinie est déterminée par calcul de la différence entre la somme de deux écarts déterminés et une distance des deux points de vue différents l'un de l'autre, ou avec lequel, selon l'étape S04, une largeur de la ligne de coulée quasi infinie est déterminée par soustraction de deux écarts déterminés de la distance des deux points de vue différents l'un de l'autre, notamment lorsque l'émission (S01) et la réception (S02) s'effectuent sensiblement à angle droit par rapport à une surface de la ligne de coulée quasi infinie.

6. Procédé selon la revendication 4, avec lequel, selon l'étape S04, une largeur de la ligne de coulée quasi infinie est déterminée par calcul de la différence entre la somme de deux écarts déterminés et une distance des deux points de vue différents l'un de l'autre, ou avec lequel, selon l'étape S04, une largeur de la ligne de coulée quasi infinie est déterminée par soustraction de deux écarts déterminés de la distance des deux points de vue différents l'un de l'autre, l'émission (S01) et la réception (S02) étant effectuées sensiblement à angle droit par rapport à une surface de la ligne de coulée quasi infinie, une fonction trigonométrique étant en outre utilisée lors de la détermination (S04) d'au moins l'un des deux écarts afin de corriger l'effet d'une déviation angulaire par rapport à la mesure à angle droit.

7. Procédé selon l'une des revendications 1 à 6, une paroi (51, 52, 61, 62) étant disposée entre le dispositif d'émission et la ligne de coulée quasi infinie, la paroi possédant un évidement (7) qui rend possible la propagation du signal.

8. Procédé selon la revendication 7, l'évidement étant dimensionné de telle sorte qu'un angle d'ouverture effectif pour le dispositif d'émission est formé, lequel est égal au maximum à 80 % de l'angle d'ouverture d'émission du dispositif d'émission.

9. Procédé selon l'une des revendications 1 à 8, la ligne de coulée quasi infinie étant produite dans un procédé de coulée continue.

10. Procédé selon l'une des revendications 1 à 9, le dispositif d'émission et/ou le dispositif de réception étant disposés dans la zone de refroidissement ou en amont de la zone de refroidissement (K), notamment immédiatement après la sortie d'une lingotière.

11. Procédé selon l'une des revendications 1 à 10, le dispositif d'émission et le dispositif de réception comportant un dispositif utilisé en commun, notamment un émetteur-récepteur radar commun.

12. Procédé selon l'une des revendications 9 à 11, le dispositif d'émission et/ou le dispositif de réception comportant une antenne cornet et/ou une antenne réseau à commande de phase.

13. **Dispositif** de coulée d'un matériau, notamment d'un métal, en une ligne quasi infinie (100, 100b) dans le cadre d'un procédé de coulée continue et de détermination sans contact d'au moins une propriété de la ligne quasi infinie (100, 100b) au moins partiellement fondue pendant la coulée de la ligne quasi infinie (100, 100b), comprenant :
- une lingotière (4), laquelle est appropriée pour former la ligne quasi infinie (100, 100b),
- une zone de refroidissement (K), dans laquelle la ligne quasi infinie (100, 100b) se refroidit, un durcissement successif de la ligne quasi infinie (100, 100b) étant rendu possible,
- un dispositif d'émission (11, 13, 31, 32), notamment un émetteur radar (11, 13, 31, 32), lequel est conçu pour émettre un premier signal (102, 103) sous la forme d'un rayonnement, notamment en tant premier signal radar (102, 103),
- un dispositif de réception (12, 13, 31, 32), notamment un récepteur radar (12, 13, 31, 32), lequel est conçu pour recevoir un deuxième signal (101, 103), notamment un deuxième signal radar (101, 103),
le deuxième signal (101, 103) étant généré au moins partiellement par une interaction du premier signal (102, 103) avec une zone de la ligne quasi infinie (100, 100b) dans la zone de refroidissement (K) ou en amont de la zone de refroidissement (K),
- une unité de traitement de données, laquelle est conçue pour déterminer au moins une propriété de la ligne quasi infinie (100, 100b) sur la base du deuxième signal (101, 103),
**caractérisé en ce que** le dispositif d'émission et/ou le dispositif de réception sont disposés de telle sorte qu'ils déterminent l'au moins une propriété de la ligne quasi infinie dans la zone de refroidissement ou en amont de la zone de refroidissement (K).

14. **Utilisation** d'un dispositif d'émission (11, 13, 31, 32) et d'un dispositif de réception (12, 13, 31, 32), notamment pour des signaux radar (101, 102, 103), pour la détermination sans contact d'au moins une propriété d'une ligne de coulée quasi infinie (100, 100b) au moins partiellement fondue pendant une opération de coulée de la ligne de coulée quasi infinie (100, 100b), laquelle refroidit dans une zone de refroidissement (K), un durcissement successif de la ligne de coulée quasi infinie (100, 100b) étant rendu possible,
le dispositif d'émission (11, 13, 31, 32) et le dispositif de réception (12, 13, 31, 32) étant disposés de telle sorte qu'ils déterminent l'au moins une propriété de la ligne quasi infinie (100, 100b) dans la zone de refroidissement (K) ou en amont de la zone de refroidissement (K).

15. **Utilisation** du procédé selon l'une des revendications 1 à 12 ou d'un dispositif d'émission selon la revendication 13 pour la détermination sans contact des marques d'oscillation de la ligne quasi infinie.
